# EUROPEAN PATENT SPECIFICATION

(11) **EP 1 234 434 B1**
(45) Date of publication and mention of the grant of the patent: **26.01.2005**
(21) Application number: 00984665.0
(22) Date of filing: 27.11.2000
(51) Int. Cl.: H04L 29/12

(54) **NETWORK ADDRESS SERVER**
NETZWERK ADDRESSEN-SERVER
SERVEUR D'ADRESSES RESEAU

(30) Priority: 26.11.1999 US 167624 P; 27.06.2000 CA 2312540
(43) Date of publication of application: 28.08.2002
(73) Proprietor: Neteka Inc., Toronto, Ontario M4P 2H5 (CA)
(72) Inventor: CHUNG, Edmon, North York, Ontario M2H 1N1 (CA); LEUNG, David, Richmond Hill, Ontario L4S 1E1 (CA)
(74) Representative: Dr. Weitzel & Partner
(86) International application number: PCT/CA2000/001393
(87) International publication number: WO 2001/039431

(56) References cited:
- US-A- 5 333 317
- BOLOT J-C ET AL: "EVALUATING CACHING SCHEMES FOR THE X.500 DIRECTORY SYSTEM" PROCEEDINGS OF THE INTERNATIONAL CONFERENCE ON DISTRIBUTED COMPUTING SYSTEMS. PITTSBURGH, MAY 25 - 28, 1993, LOS ALAMITOS, IEEE COMP. SOC. PRESS, US, vol. CONF. 13, 25 May 1993 (1993-05-25), pages 112-119, XP000399379 ISBN: 0-8186-3770-6
- BOHDAN SMETANIUK: "DISTRIBUTED OPERATION OF THE X.500 DIRECTORY" COMPUTER NETWORKS AND ISDN SYSTEMS, NORTH HOLLAND PUBLISHING. AMSTERDAM, NL, vol. 21, no. 1, 1 March 1991 (1991-03-01), pages 17-40, XP000177093 ISSN: 0169-7552
- K. MOORE: "MIME Part Three: Message Header Extensions for Non-ASCII Text" IETF/RFC2047, [Online] XP002175815 Retrieved from the Internet: <URL:http://www.ietf.org/rfc> [retrieved on 2001-08-23]

## Description

### FIELD OF THE INVENTION

The present invention relates to a system and method for facilitating communication between domains of a wide area network. In particular, the present invention relates to a network server for associating network address names with physical network addresses.

### BACKGROUND OF THE INVENTION

In order to facilitate communication between communication devices over a network, each network device is typically assigned a unique numeric network address. A user associated with one of the network devices then need only provide the network transport layer with the numeric network address of the intended target to communicate with the target. Although this system functions satisfactorily in small network where users only communicate with a small number of network communication devices, the system cannot be readily transported to large networks since it would require each network user to remember a large number of unique numeric network addresses. For this reason, the domain name system (DNS) was proposed by Mockapetris in 1987 (RFC 1034 and RFC 1035, Network Working Group; presently available at "http://www.ietf.org") as a mechanism for facilitating communication between communication devices over the Internet.

The DNS facilitates Internet communication by associating domain names with the numeric (IP, "Internet Protocol") network addresses. The DNS basically consists of resource records, domain name servers, and resolvers. Each resource records includes information concerning each network node, including the IP address of the network node, and the domain names associated with the IP address. Together, the resource records provide the Internet with a tree-structured domain name space. Domain name servers are Internet servers which retain information concerning the domain name space. In particular, each domain name server has a file ("zone file") which retains resource records associated with its own subset of the domain name space. These records are referred to as "authoritative" records. Also, through queries from resolvers, domain name servers also temporarily cache copies of resource records acquired from other domain name servers in order to improve the performance of the retrieval process when non-local data is requested by a resolver. Resolvers are local programs which extract information from domain name servers in response to client requests.

Typically, the domain name associated with a network device at particular IP address has a top level label field, and one or more lower level label fields. The label fields comprising a domain name are separated from one another through a delimiter ("."), and are each positioned in the domain name according to their respective relative levels in the domain name hierarchy. To access a particular network device (including transmitting an e-mail message to a recipient having an e-mail account subsisting at a remote network device) a user provides a resolver, through an Internet browser, with the domain name associated with the target network device. The resolver queries a root DNS server with the top level label identified in the domain name to obtain the IP address of the DNS server which has the zone file associated with the top level domain. The resolver then accesses the identified DNS server using the obtained IP address, and with the label occupying the next highest position in the domain name hierarchy (the label immediately to the left of the top level label in the domain name) obtains the IP address of the DNS server which has the zone file associated with the queried label. The process continues until each label in the domain name has been resolved, at which point the last queried DNS server provides the resolver with the IP address of the network device having the specified domain name. Although the DNS has been implemented successfully worldwide, it suffers from at least three main deficiencies.

First, the domain names implemented by the DNS must follow the rules for ARPANET host names. Consequently, each label must begin and end with a "letter" or one of the numbers 0 to 9, and contain only "letters", the numbers 0 to 9 or a hyphen in between. Further, each "letter" can only be one of'A' to 'Z' and 'a' to 'z'. As a result, the number of domain names available is severely limited. Second, the DNS system is case insensitive, so that two domain names which have identical spellings but whose component letters do not correspond in terms of their respective cases, will resolve to the same network address. As will be apparent, this requirement further limits the number of domain names which can be used. Third, since the resource records for each sub-domain are stored in zone files, the number of domain names and the speed of the resolving process is limited by the hardware restrictions of the domain name servers.

Although e-mail systems existed long before the DNS was established, the problems inherent with existing e-mail systems closely parallel those of the DNS. In particular, most e-mail system only accept, for inclusion as part of an e-mail account name, the hyphen, the numbers 0 to 9 and the letters 'A' to 'Z' and 'a' to 'z', thereby limiting the number of account names available. Again, most e-mail systems are also case insensitive, further limiting the number of account names available.

Attempts have been made to resolve some of the deficiencies of the existing network address naming systems. For instance, RealNames (www.realnames.com) and iDNS (www.idns.org) have proposed modifications to the existing domain name system which attempt to expand upon the number of domain names available. Both systems would allow users to enter a domain name into the URL field of their browser, without the name following the rules for ARPANET host names. For instance, subscribers could enter into their Internet browser a domain name which includes symbols, and/or letters from non-English language character sets. The domain name would be transmitted to a proprietary RealNames or iDNS server which would then translate the domain name into an ARPANET-compliant domain name for resolution by the existing DNS. As will be apparent, these solutions could cause a computation bottleneck since each domain name would have to be translated first by their proprietary servers prior to resolution by a domain name server. Further, these solutions would not be suitable for e-mail addresses since the portion of the e-mail address identifying the originator and recipient of the e-mail message would still need to be translated by the recipient's e-mail POP3 server.

Microsoft Corporation has proposed a solution (http://search.ietf.orf/internet-drafts/draft-skwan-utf8-dns-02.txt) which would increase the size of the character set available for domain names. According to the proposal, DNS packets would be migrated from the existing ASCII format to the UTF-8 format. However, this latter solution would require that all Internet browsers be updated before domain names employing UTF-8 characters were used since UTF-8 characters are encoded using a double-byte structure. Consequently, a domain name server, implemented using BIND for example, would incorrectly interpret a UTF-8 character received from a conventional browser as two characters instead of one, resulting in an incorrect resolution of the domain name.

Smctaniuk ("Distributed Operation of the X.500 Directory", Computer Networks and ISDN Systems, vol. 21 No. 1, March 1991) describes an OSI specification for a distributed global on-line directory of unlimited size. The X.500 directory system consists of a number of application processes (DSAs) each maintaining a Directory Information Base (DIB). Each DIB comprises a hierarchical arrangement of objects, each identified by a relative distinguished name.

A name is resolved by passing a target name from DSA to DSA until a DSA is reached that contains an object entry whose distinguished name matches an initial portion of the target name. The DSA evaluates the request amongst its object entries and, if necessary, sends subrequests to subordinate DSAs that hold an object entry whose distinguished name matches a larger portion of the target name. This step is repeated, with each subordinate DSA sending subrequests to more subordinate DSAs until the subrcquest is passed to a DSA that holds an object entry whose distinguished name matches the entire target name.

Dann (US 5 333 317) discloses a name resolution system that includes one or more Directory Information Bases (DIBs), and an index tree to an X.500 directory for resolving a target common name to a stored normalized name. All of the DIBs together comprise a distributed X.500 directory, with each DID maintaining a fragment of the entire X.500 directory.

The index tree contains one or more nodes, each including a branch key for directing a search of the X.500 directory. Each branch key includes a prefix string, one or more branch characters for the node, and a pointer to subtrees of the node. The prefix contains the longest string of leading characters shared by the node and each subtree of the node. The branch characters for a node, together with the prefix for the parent node, define the index entry for the node. Target names are by searching the index from the root node downwards on a node-by-node basis for all index nodes having a name field that matches a component of the target name, and then identifying a likely match by computing a weighted sum of the matches.

BOLOT J-C ET AL: 'EVALUATING CACHING SCHEMES FOR THE X.500 DIRECTORY SYSTEM' PROCEEDINGS OF THE INTERNATIONAL CONFERENCE ON DISTRIBUTED COMPUTING SYSTEMS, PITTSBURGH, MAY 25 - 28, 1993, LOS ALAMITOS, IEEE COMP. SOC. PRESS, US, vol. CONF. 13, 25 May 1993 (1993-05-25), pages 112-119, XP000399379 ISBN: 0-8186-3770-6 discloses a further system based on the X.500 directory.

Therefore, there remains a need for a network address naming system which expands upon the number of domain names available, without creating computational bottlenecks and without requiring significant changes to existing browser software. Further, there remains a need for a network address naming system which expands the size of the character set available for the account name component of e-mail addresses.

### SUMMARY OF THE INVENTION

According to a first aspect of the present invention, there is provided a network address server with the features of claim 1 and a method for resolving a target network address name with a network address with the features of claim 5, which address deficiencies of the prior art network address naming systems.

The network address server, according to the first aspect of the invention, is configured to resolve a target address name label with a network address, with the target address name label defining a branch of one level of a multi-level network address name space. The network address server is one of a plurality of network address servers each being uniquely associated with a respective region of the address name space level. The network address server includes an address name database, and an address name processor in communication with the address name database for providing a response to a query for the network address corresponding to the target address name label. The address name database includes a number of database records, each identifying a unique address name label and a network address uniquely associated with the address name label. The address name processor includes a correlation processor, a correlation transceiver in communication with the correlation processor, and a response processor in communication with the correlation processor and the correlation transceiver. The correlation processor is configured to determine a correlation between the target address name label and the respective unique address name region. The correlation transceiver is configured to provide the other network address servers with a respective indication of the determined correlation and for receiving a corresponding correlation indication from at least one of the other network address servers. The response processor is configured to provide a response to the query in accordance with the correlation indications.

The method for resolving a target network address name, according to the first aspect of the invention, includes the steps of (1) receiving at a first network address server a query for the network address corresponding to the target address name label, the first network address server being one of a plurality of network address servers each including database records defining a unique region of the address name space level, each database record associating a unique address name label with a corresponding network address; (2) at the first network address server determining a correlation between the received target address name label and the respective unique address name region; (3) at the first domain name server providing the other network address servers with a respective indication of the correlation and receiving corresponding correlation indications from at least one of the other network address servers; and (4) at the first network address server providing a response to the query in accordance with the correlation indications.

According to a second aspect of the present invention, there is provided a method for resolving network address names with the features of claim 9 which addresses deficiencies of the prior art network address naming systems. The method for resolving network address names, according to the second aspect of the invention, includes the steps of (1) providing a plurality of network address servers for mapping a hierarchical network address name space, the hierarchical address name space having a number of levels, each network address server including database records defining a unique subset of a respective level of the address name space, each database record associating a unique address name with a corresponding network address; (2) receiving a target address name for resolving, the target address name including a number of address name labels, each address name label being associated with one of the subsets of a respective one of the address name space levels; and (3) for each address name label querying at least one of the network address servers defining the associated address name space level.

In a preferred embodiment of the invention, the network address server comprises a domain name server for resolving a target domain name label with a network address. Each domain name server has a correlation indication response time, and the domain name server which returns the response to the query has the shortest of the correlation indication response times. Preferably, each database record includes at least one record character having a record character set type, and a record character set identifier identifying the record character set type. The target domain name label includes at least one domain name character having a domain name character set type, and a domain name character set identifier identifying the domain name character set type. The correlation processor determines the correlation between the target domain name label and the respective unique domain name region by querying the respective database records with the target domain name label, and obtaining a correlation of the domain name characters and the associated domain name character set identifier with each database record of record characters and the associated record character set identifier.

Further, the domain name label of each database record is associated with a hash code derived from a hashing function which uniquely associates the derived hash code with the corresponding domain name label. The correlation processor includes a hash code processor for encoding the target domain name label with the hashing function, and a search engine in communication with the correlation processor for querying the hashed database records with the hashed domain name label. The correlation processor obtains the correlation by encoding the target domain name label with the hashing function, and querying the hashed database records with the hashed domain name label.

### BRIEF DESCRIPTION OF THE DRAWINGS

The preferred embodiment of the invention will now be described, by way of example only, with reference to the drawings, in which:
Fig. 1 is a schematic view of network address name resolution system, according to the present invention, depicting a plurality of network clients, a plurality of network address servers, and a communications network interconnecting the network clients and the network address servers;
Fig. 2 is a schematic view of the network address server shown in Fig. 1, depicting the address name database, and the correlation processor, the correlation transceiver and the response processor of the address name processor;
Figs. 3a to 3d are schematic views of sample database records comprising the address name database shown in Fig. 2;
Fig. 4 is a schematic diagram of a data packet used to query the name network address servers; and
Fig. 5 is a flow chart depicting the sequence of steps executed by the network address server in resolving a target network address name label with a network address.

### DETAILED DESCRIPTION OF THE PREFERRED EMBODIMENT

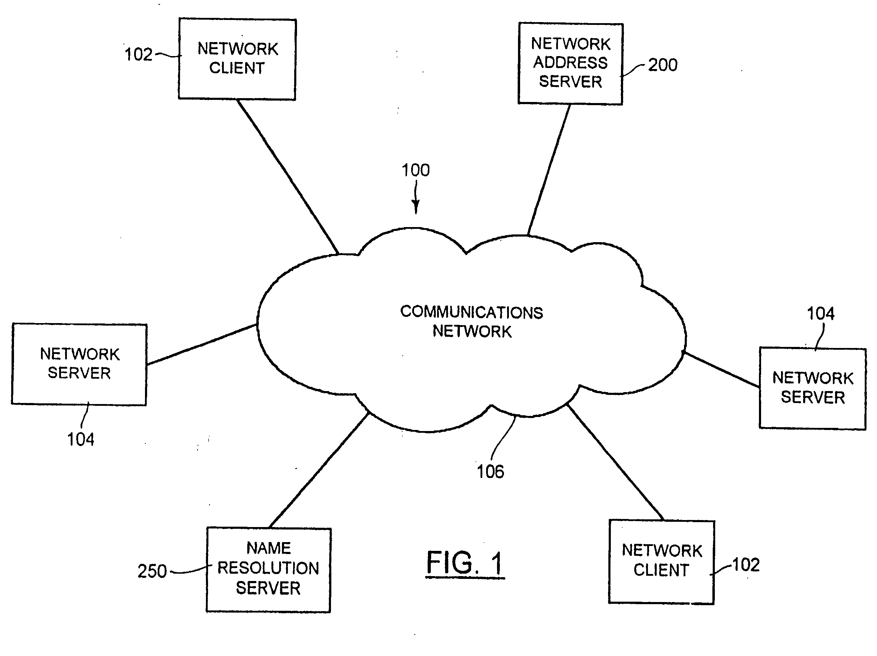

Turning to Fig. 1, a network address name resolution system, denoted generally as 100, is shown comprising a plurality of network clients 102, a plurality of network servers 104, a plurality of network address servers 200, a plurality of name resolution servers 250, and a communications network 106 interconnecting the network clients 102, the network servers 104, the network address servers 200 and the name resolution servers 250. Preferably, each network client 102 comprises a personal computer equipped with software for communicating with the network servers 104 over the communications network 106.

Typically, the communications network 106 comprises the Internet, however the communications network 106 may also comprise other network forms, such as an intranet. Further, although the network address name resolution system 100 will be described below as a domain name resolution system, it should be understood that the network address name resolution system 100 can have other applications, including acting as an e-mail user account name resolution system. Other applications of the network address name resolution system 100 will be apparent to those skilled in the art, and are encompassed by the present invention.

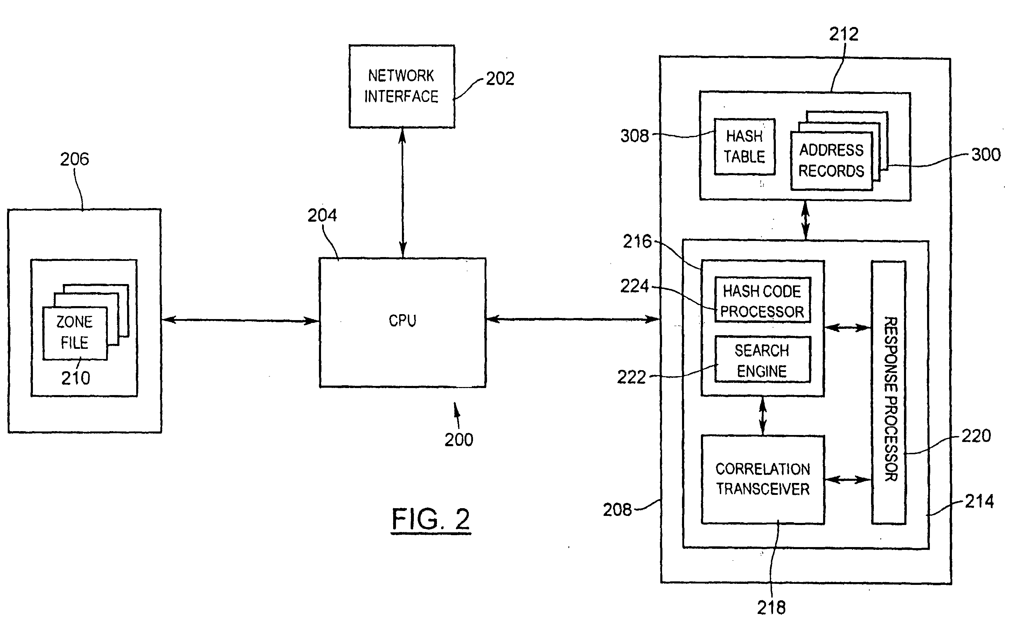

As shown in Fig. 2, each network address server 200 comprises a network interface 202 for communicating with the network clients 102 over the communications network 106, and a central processing unit (CPU) 204 in communication with the network interface 202, and a non-volatile memory (NVM) 206 and a volatile memory (RAM) 208 in communication with the CPU 204. Preferably the NVM 206 comprises a magnetic or optical storage device, and includes a zone file 210 which has records associating domain names with network addresses. The NVM 206 also includes processor instructions for the CPU 204 which establish in the RAM 208 a network address name database 212 as a copy of the zone file 210, and a memory object defining an address name processor 214 in communication with the address name database 212. As will be appreciated, the network address name database 212 is established in the RAM 208 to increase the speed of the resolving process and may be dispensed with in applications where speed is not a paramount concern.

In accordance with the present structure of the Internet, the domain names of the network servers 104 (each of which is associated with a particular network address and comprises a plurality of domain name labels) together define a hierarchical network address name space having a plurality of address name space levels. For instance, generic top-level domain name labels, such as COM, EDU, MIL, NET, ORG, and country-specific top-level domain name labels, such as CA, UK, JP etc. each reside in the uppermost level of the network address name space. Below each top-level domain name label reside a plurality of second level domain name labels, and below each second level domain name label typically reside at least one lower level domain name label. The address name database 212 of each network address server 200 includes a plurality of database records 300, each defining a unique region of the address name space level.

To enhance the speed of the resolution process, preferably each level of network address name space is distributed across a plurality of different network address servers 200, with each address name database 212 being associated with a unique subset of the domain name labels defined for a particular address name space level. In essence, each network address server 200 is associated with a unique region of the entire address name space, with the address name databases 212 of all the network address servers 200 associated with a particular address name space level together identifying all the domain name labels defined for the associated address name space level. However, consistent with the existing DNS structure, preferably the network address name resolution system 100 includes redundant or secondary network address servers 200, so that each unique region of the address name space is serviced by two or more network address servers 200.

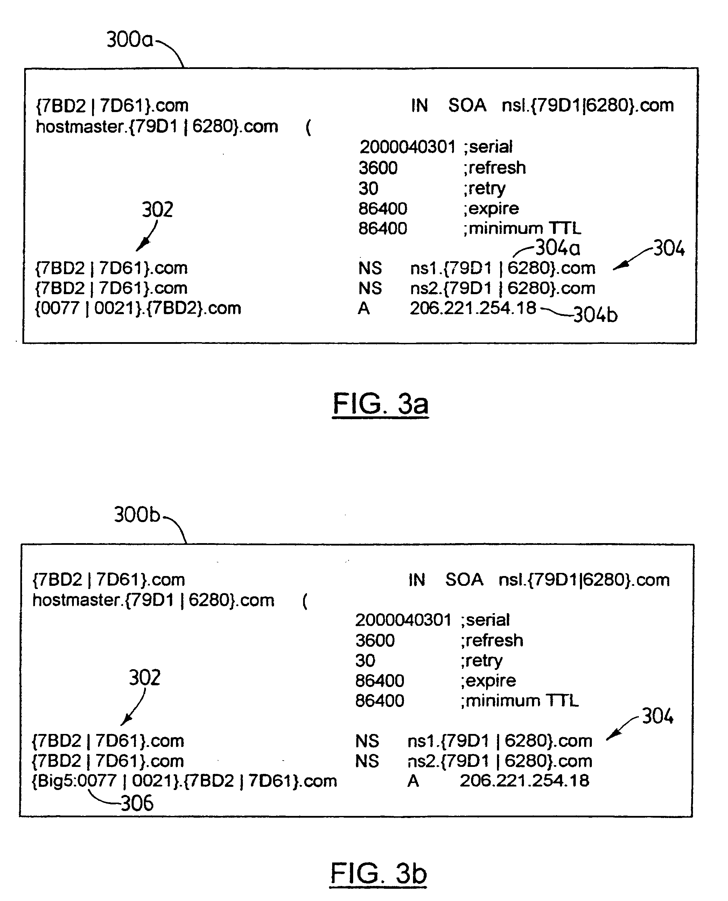

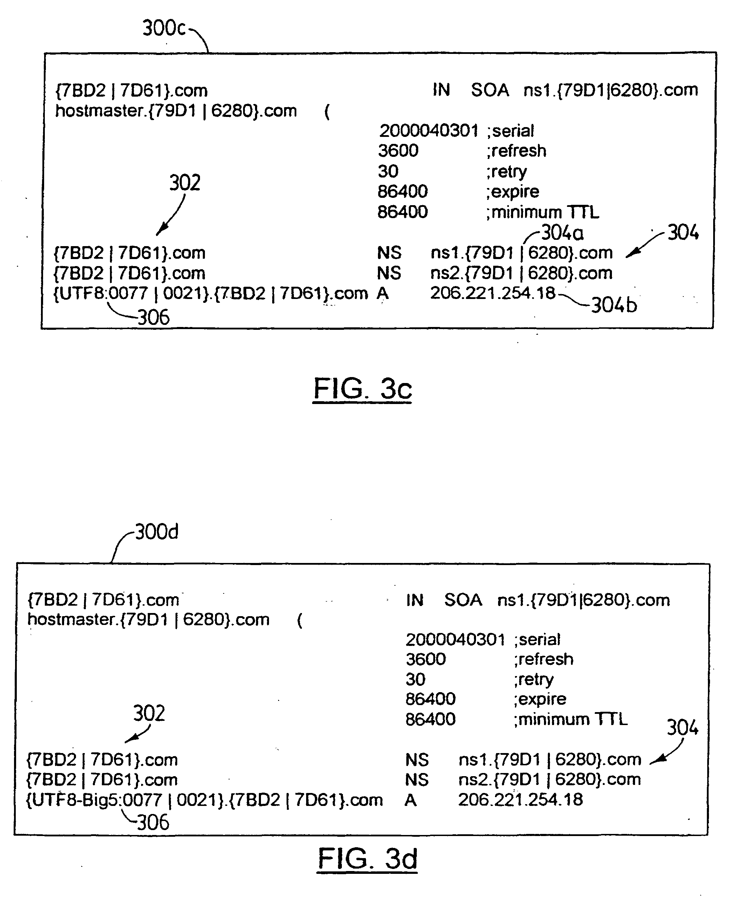

The structure of typical database records 300a, 300b, 300c, 300d are shown in text format in Fig. 3. As will be apparent, the database records 300 are substantially similar to the BIND-based text zone file resource records presently used in the DNS described by Mockapetris, in that each database record 300 includes an address name label 302 identifying a particular domain name, and at least one network address 304 associated with the address name label 302. In accordance with the existing DNS convention, each network address 304 is either (1) a network address server network address 304a of a network address server 200 which contains in its address name database 212 a network address name associated with the next lowermost level of the network address name space, or (2) the domain name network address 304b of the domain name being resolved.

However, unlike the ASCII text used in existing BIND-based zone file records, to overcome the character set limitation inherent in the conventional domain name system preferably each address name label 302 is defined using characters from the Unicode character set (ISO 10646), since the Unicode character set includes symbols and characters from a number of different languages. However, to avoid limiting the network address name resolution system 100 to any particular character set, it is envisaged that each address name label 302 may use characters from any of a plurality of character set. Therefore, preferably each database record 300 also includes a character set identifier identifying the character set type used to define the address name label 302.

For instance, the database record 300b includes as the character set identifier 306 the string "Big5" to denote the Big5 Chinese character set, whereas the database record 300c includes as the character set identifier 306 the string "UTF8" to denote the UTF8 double-byte Chinese character set. Further, the Chinese language extension for the Microsoft Internet Explorer browser incorrectly treats each UTF8 double-byte character as two separate characters, thereby providing an incorrect transformation of UTF8 characters. Therefore, the database record 300d includes as the character set identifier 306 the string "UTF8-Big5" to transparently provide Internet Explorer users with the correct resolution of domain names defined by UTF8 characters. In addition, preferably each database record 300 also includes as the character set identifier 306 the string "UTF7" to interface with name resolution servers 250 which are not 8-bit compliant.

As shown in Fig. 2, in one variation the address name database 212 also includes a hash table 308 having a plurality of hash values, each derived from a respective one of the address name labels 302. As will be explained, the hash table 308 improves the speed of the domain name resolution process and may be eliminated if speed is not a paramount concern, or if the address name database 212 does not contain a large number of records 300.

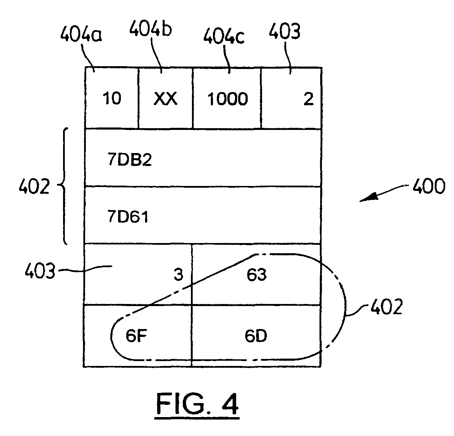

A portion of a data packet 400 for querying the network address servers 200 with a target domain name, is shown in Fig. 4. The structure of the overall data packet 400 is substantially similar to the datagram message format described by Mockapetris for conventional DNS queries, in that the data packet includes the HEADER, QUESTION, ANSWER, AUTHORITY AND ADDITIONAL records (not shown). Further, as described by Mockapetris, the QUESTION, ANSWER; AUTHORITY AND ADDITIONAL records comprise one or more of the QNAME, QTYPE, QCLASS, TTL, RDLENGTH and RDATA fields (not shown).

Further, as proposed by Mockapetris, the QNAME field includes a target domain name label 402 identifying the target domain name, and an 8-bit character count identifier 403 preceding the domain name label 402 which identifies the number of characters in the domain name label. However, rather than each target domain name comprising only ASCII characters, as proposed by Mockapetris, preferably each address name label 402 is defined using characters from the Unicode character set. On the other hand, as discussed above, to avoid limiting the network address name resolution system 100 to any particular character set, it is envisaged that each target domain name label 402 may use characters from any of a plurality of character sets. Therefore, preferably each data packet 400 also includes a 16-bit character set identifier 404 identifying the character set type used to define the target domain name label 402. As shown, the character set identifier 404 includes a 2-bit prefix portion 404a which indicates to the network address server 200 that the data packet 400 includes non-ASCII characters, a 2-bit flag portion 404b for future enhancement purposes, and a 12-bit code portion 404c which identifies the character set type.

Preferably, the code portion 404c uses a standardized specification for the identification of the character set, such as the MIBenum specification proposed in RFC 1700. Thus, as will be apparent from RFC 1700, the value "1000" as used in the code portion 404c denotes that the following domain name label is composed of characters from the Unicode character set. However, as one goal of the network address name resolution system 100 is to promote the use of a common character set capable of recognizing any multi-national character, it is expected that the 12-bit code portion 404c, the 2-bit prefix portion 404a and the 2-bit flag portion 404b may be eliminated altogether once all network resolution address servers 200 adopt a common character set for the representation of domain name labels. On the other hand, it is also expected that domain name labels may comprise symbols which are not part of any recognized character set, such as a graphic representation or logo which is being used as a trade-mark, in which case the code portion 404c would be retained to identify the character set associated with the symbol.

As shown in Fig. 4, preferably the 2-bit prefix portion 404a is set to "10" to identify that the following domain name label includes non-ASCII characters. However, as will be apparent from RFC 1035, since a domain name label is limited to 63 octets in length, the two most significant bits of the 8-bit character counter identifier 403 will typically be "00". Therefore, to promote compatibility with the DNS standard described by Mockapetris and to promote backwards compatibility with prior art name resolution servers 250 (which do not recognize non-ASCII characters), if the target domain name label 402 consists only of ASCII characters preferably the 16-bit character set identifier 404 which would otherwise precede the character count identifier 403 for the domain name label 402 would be eliminated. For example, the final two "rows" of data in the data packet 400 only include the 8-bit character counter identifier 403 (identifying that the last domain name label in the domain name has 3 ASCII characters) and a target domain name label 402 whose characters together define the "com" domain name label. Consequently, since the two most significant bits of the 8-bit character counter identifier 403 will not be "10" for a domain name label consisting only of ASCII characters, name resolution servers 250 will be able to resolve such a domain name label without modification to the prior art DNS algorithm.

Turning again to Fig. 2, the address name processor 214 (which is in communication with the address name database 212) is shown comprising a correlation processor 216, a correlation transceiver 218 in communication with the correlation processor 216, and a response processor 220 in communication with the correlation processor 216 and the correlation transceiver 218. The correlation processor 216 is configured to determine a correlation between the domain name label 402 being resolved and the unique address name region associated with the particular network address server 200. In other words, the correlation processor 216 of each network address server 200 is configured to determine whether a target domain name label 402 (as queried by one of the network clients 102) has a corresponding entry in the network address server's 200 address name database 212.

The correlation processor 216 is configured to determine the correlation between the target domain name label 402 and the network address server's 200 assigned unique domain name region by querying the database records 300 of the network address server 200 with the target domain name label 402, and then comparing the domain name characters and the associated domain name character set identifier 404 with the record characters (of the address name label 302) and the associated record character set identifier 306. As will be apparent, the correlation processor 216 continues to analyse each database record 300 until either a matching database record 300 is located in the respective address name database 212 or until all the database records 300 in the respective address name database 212 have been analyzed.

The correlation processor 216 includes a search engine 222 for querying the database records with the domain name label. However, in the variation, discussed above, where the address name database 212 includes the hash table 308, preferably the correlation processor 216 also includes a hash code processor 224 for encoding the target domain name label with the hashing function, with the search engine 222 being in communication with the hash code processor 224 for querying the hashed database records with the hashed domain name label. In this variation, the correlation processor 216 obtains the correlation by encoding the target domain name label with the hashing function used to create the hash table 308, and then querying the hashed database records 300 with the hashed domain name label 402.

The correlation transceiver 218 of each network address server 200 is configured to provide the other network address servers 200 with a respective indication of the determined correlation, and to receive corresponding correlation indications from at least one of the other network address servers 200. The response processor 220 is configured to provide a response to the query in accordance with the correlation indications.

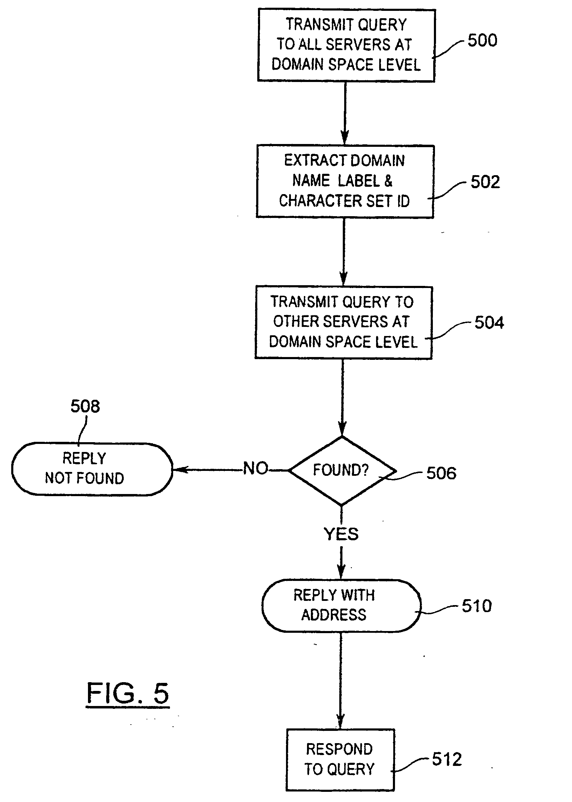

The operation of the network address-name resolution system 100 will now be described with reference to Fig.5. To demonstrate the resolution process, the name "www.Φ.com" will be used as the target domain name, as processed by one of the network address servers 200. As will be apparent, all of the network address servers 200 of the network address name resolution system 100 function in a similar manner.

Once the network address servers 200 are deployed, upon power-up each network address server 200 reads its zone file 210 from its NVM 206 and creates (as a copy) its network address name database 212 in its RAM 208. Then, at step 500, using a data packet 400 similar to that shown in Fig. 4, one of the network clients 102 transmits a target domain name query request (to communicate with one of the network servers 104) to one of the name resolution servers 250 for resolution of the target domain name to a network address. As discussed above, if the network client 102 is compliant with the name resolution protocol disclosed herein, since the target domain name includes the character "Φ", the two most significant bits of the 8-bit character counter identifier 403 will be"10".

Upon receipt of the data packet 400, the name resolution server 250 transmits the query to all the network address servers 200 associated with the top-level of the address name space. In this example, the query is transmitted to the root network address servers 200 for identification of the network address of one of the network address servers 200 assigned to the "COM" domain name space. The network interface 202 of the top-level network address servers 200 receive the query, and transmit the query to their respective address name processors 214. At step 502, the address name processor 214 of each top-level network address server 200 extracts the target domain name label 402 and the associated character set identifier 404 from the data packet 400. The address name processor 214 then determines the correlation between the target address name label 402 and the unique address name region assigned to the respective network address server 200.

To do so, at step 504 preferably the correlation processor 216 of the top-level network address server 200 which is first to receive and process the domain name query (hereinafter the "first top-level network address server 200") transmits the query to the other top-level network address servers 200 to the other top-level network address servers 200, with a flag indicating that these other top-level network address servers 200 should transmit their respective responses to the first top-level network address server 200. Besides increasing the speed of the resolution process, as will be explained below, this step ensures that the network client 102 will only receive a single response to the domain name query.

After the notification is sent, at step 506 the hash code processor 224 of the correlation processor 216 of each top level network address server 200 derives a hash code from the extracted target domain name label 402 and the associated character set identifier 404. The search engine 222 of the correlation processor 216 of each top level network address server 200 then queries the database records 300 of their respective network address name databases 212 with the derived hash code for a matching entry in their network address name database 212. If no match is located, at step 508 the correlation transceiver 218 of each of the top-level network address servers 200 provides the first top-level network address server 200 with a data packet indicating that the domain name was not found in the network address server's address name database 212.

On the other hand, if a match is located, at step 510 the top-level network address server 200 having the matching entry replies to the first top-level network address server 200 with the network address of one of the network address servers 200 assigned to the "com" domain name space. Alternately, if the top-level network address server 200 has an authoritative record for the domain name, the network address server 200 replies to the first top-level network address server 200 with the network address associated with the domain name.

At step 512, the first top-level network address server 200 responds with the retrieved network address to the name resolution server 250 which initiated the query. If the first top-level network address server 200 only responded with the network address of one of the network address servers 200, the name resolution server 250 transmits the query to the network address servers 200 having the retrieved network address. The process repeats in accordance with steps 500 to 512, but with the query being transmitted to the "com" network address servers 200 for identification of the network address of one of the network address servers 200 assigned to the "Φ.com" domain name space. As will be appreciated, at step 512 the first "com" network address server 200 responds to the network client 102 which initiated the query either with the network address of one of the network address servers 200 assigned to the "Φ.com" domain name space, or the retrieved network address.

Again, the process repeats in accordance with steps 500 to 512, but with the query being transmitted to the "Φ.com" network address servers 200 for identification of the network address of one of the network address servers 200 assigned to the "www.Φ.com" domain name space. At step 512, the first "Φ.com" network address server 200 responds to the name resolution server 250 which initiated the query either with the network address associated with the target domain name, or with a indication that the target domain name was not found. The network client 102 then transmits the response to the network client 102 to allow the network client 102 to establish communication with the target network server 104.

If at any iteration of step 512, no response is received from any of the other network address servers 200 and a matching entry cannot be found by the first network address server, the first network address server responds to the name resolution server 250 at step 512 with a time out error.

The present invention provides a number of advantages of the prior art. First, by separating each level of the domain name space into distinct portions, and assigning each domain name portion to different network address servers 200, the number of domain names available is no longer limited by the hardware restrictions of any one domain name server. Second, by distributing the domain name space amongst multiple network address servers 200, startup costs for establishing a network address server 200 is reduced. Third, by using the Unicode character set, rather than the ASCII character set used by conventional domain name servers, the number of domain names can be greatly enhanced. Fourth, by using a character set identifier to identify the character set of a domain name label, the network address name resolution system 100 can be readily configured to recognize new character sets and to accept enhancements to existing character sets. Further, by employing the network address servers 200 as account network address servers in an e-mail system, the type of characters which can be used for the account names assigned to an e-mail account can also be greatly enhanced.

The present invention is defined by the claims appended hereto, with the foregoing description being illustrative of the preferred embodiment of the invention. Those of ordinary skill may envisage certain additions, deletions and/or modifications to the described embodiment, which although not explicitly described herein, do not depart from scope of the invention, as defined by the appended claims.

## Claims

1. A network address server (200) for resolving a target domain name label with a network address, **characterized in that** the network address server (200) is one of a plurality of network address servers (200) each being associated with a common level of a multi-level network address name space, the network address server (200) comprising:
an address name database (212) including a plurality of database records (300) associated with a respective region of the common level, each said database record (300) including an address name label (302) and a network address (304) uniquely associated with the address name label (302); and
an address name processor (214) in communication with the address name database (212) for providing a response to a query for the network address corresponding to the target domain name label (402), the domain name processor (214) including a correlation processor (216) for determining a correlation between the target domain name label (402) and the associated region, a correlation transceiver (218) in communication with the correlation processor (216) for receiving an indication of a corresponding determined correlation from at least one of the other network address servers (200), and a response processor (220) in communication with the correlation processor (216) and the correlation transceiver (218) for providing a response to the query in accordance with the determined correlations.

2. The network address server according to claim 1, wherein the address name database (212) includes for each said database record (300) a hash code derived from a hashing function uniquely associating the derived hash code with the corresponding address name label.

3. The network address server according to claim 2, wherein the correlation processor (216) comprises a hash code processor (224) for encoding the target domain name label with the hashing function, and a search engine (222) in communication with the correlation processor (216) for querying the hashed database records (308) with the hashed domain name label.

4. The network address server according to claim 1, wherein each said database record (300) includes at least one record character having a record character set type, and a record character set identifier (306) identifying the record character set type.

5. A method for resolving a target domain name label with a network address in a multi-level network address name space, the method comprising the steps of:
receiving at a first network address server (200) a query for the network address corresponding to the target domain name label (402), the first network address server (200) being one of a a plurality of network address servers (200) each being associated with a common level of the network address name space, the network address servers each including database records (300) defining a respective unique region of the common level, each said database record (300) including an address name label (302) and a network address (304) uniquely associated with the address name label (302);
at the first network address server (200) determining a correlation between the received target domain name label (402) and the associated region;
providing the other network address servers (200) with the determined correlation and at the first network address server (200) receiving an indication of a corresponding determined correlation from at least one of the other network address servers (200); and
at the first network address server (200) providing a response to the query in accordance with the determined correlations.

6. The method according to claim 5, wherein each said network address server (200) has a correlation response time, and the first network address server (200) has a shortest one of the correlation response times.

7. The method according to claim 5, wherein the database records (300) each include at least one record character having a record character set type, and a record character set identifier (306) identifying the record character set type, the target domain name label (402) includes at least one address name character having an address name character set type. and an address name character set identifier (404) identifying the address name character set type, and the step of determining a correlation comprises the steps of querying the respective database records (300) with the received address name label (402), and obtaining a correlation of the at least one address name character and the associated address name character set identifier (404) with each said at least one record character and the associated record character set identifier (306).

8. The method according to claim 7, wherein the database records (300) are encoded with a hashing function, and the step of obtaining a correlation comprises the steps of encoding the target address name label (402) with the hashing function, and querying the hashed database records (308) with the hashed address name label.

9. A method for resolving network domain names comprising the steps of:
providing a pluraiity of network address servers (200) for mapping a hierarchical network address name space, the hierarchical address name space having a plurality of levels, each said network address server (200) being associated with at least one other of said network address servers (200) and a common level of the network address name spate, each said network address server (200) including database records (300) defming a respective unique region of the associated common level, each said database record (300) including an address name label (302) and a network address (304) uniquely associated with the address name label (302);
receiving at one of the network address servers (200) a target domain name for resolving, the target domain name comprising a plurality of address name labels (402), each said address name label being associated with one of the regions of a respective one of the common levels; and
for each said address label (402) querying the network address servers (200) defining the one common level.

10. The method according to claim 9, wherein the step of receiving the network address comprises the steps of at each said queried network address server (200) determining a correlation between the queried address name label (402) and the respective defined address name space subset, providing other ones of the queried network address servers (200) with an indication of the correlation and receiving correlation indications from the other queried network address servers (200), and transmitting a response to the query in accordance with the correlation indications.

11. The method according to claim 10, wherein each said queried network address server (200) has a correlation indication response time, and the step of transmitting a response comprises transmitting the response from the queried network address server (200) having a shortest one of the correlation indication response times.

12. The method according to claim 10, wherein the database records (300) each include at least one record character having a record character set type, and a record character set identifier (306) identifying the record character set type, the queried address name label (402) includes at least one address name character having an address name character set type, and an address name character set identifier (404) identifying the address name character set type, and the correlation determining step comprises the steps of receiving the queried address name label (402), and querying the respective database records (300) with the at least one address name character and the associated address name character set identifier (404) for obtaining a respective correlation with each said at least one record character and the associated record character set identifier (306).

13. The method according to claim 12, wherein the database records (300) are encoded with a hashing function, and the step of querying the respective database records (300) comprises the steps of encoding with the hashing function each queried address name label (402), and querying the bashed database records (308) with the hashed address name labels.

## Patentansprüche

1. Ein Netzadressen-Server (200) zum Auflösen einer Kennzeichnung eines Ziel-Domain-Namens mit einer Netzadresse, **dadurch gekennzeichnet, dass** der Netzadressen-Server (200) einer einer Vielzahl von Netzadressen-Servern (200) ist, wobei jedem eine gemeinsame Ebene eines Netzadressen-Namenraumes mit mehreren Ebenen zugeordnet ist, wobei der Netzadressen-Server (200) umfasst:
eine Adressnamen-Datenbank (212), umfassend eine Vielzahl von Datenbank-Datensätzen (300), denen ein jeweiliger Bereich der gemeinsamen Ebene zugeordnet ist, wobei jeder der gesagten Datenbank-Datensätze (300) eine Kennzeichnung eines Adressnamens (302) und eine Netzadresse (304), welcher eindeutig die Kennzeichnung des Adressnamens (302) zugeordnet ist, umfasst; und
einen Adressnamen-Prozessor (214), welcher in Verbindung mit der Adressnamen-Datenbank (212) steht, zum zur Verfügung Stellen einer Antwort auf eine Abfrage der Netzadresse, welche der Kennzeichnung des Ziel-Domain-Namens (402) entspricht, wobei der Domain-Namen-Prozessor (214) einen Korrelationsprozessor (216) zum Bestimmen einer Korrelation zwischen der Kennzeichnung des Ziel-Domain-Namens (402) und dem zugeordneten Bereich umfasst, ferner einen Korrefations-Transceiver (218), der in Verbindung mit dem Korrelationsprozessor (216) zum Empfangen eines Hinweises einer entsprechenden bestimmten Korrelation von wenigstens einem der anderen Netzadressen-Server (200) steht, und einen Antwort-Prozessor (220), der in Verbindung mit dem Korrelationsprozessor (216) und dem Korrelations-Transceiver (218) zum zur Verfügung Stellen einer Antwort auf die Abfrage in Übereinstimmung mit den bestimmten Korrelationen steht.

2. Der Netzadressen-Server gemäß Anspruch 1, wobei die Adressnamen-Datenbank (212) für jeden der gesagten Datenbank-Datensätze (300) einen Hash-Code umfasst, der aus einer Hash-Codierungsfunktion abgeleitet worden ist, welche eindeutig dem abgeleiteten Hash-Code die zugehörige Kennzeichnung eines Adressnamens zuordnet.

3. Der Netzadressen-Server gemäß Anspruch 2, wobei der Korrelationsprozessor (260) einen Hash-Code-Prozessor (224) zum Codieren der Kennzeichnung des Ziel-Domain-Namens mit der Hash-Codierungsfunktion umfasst, und ferner eine Suchmaschine (222), welche in Verbindung mit dem Korrelationsprozessor (216) zum Abfragen der Hash-codierten Datenbank-Datensätze (308) mit der Hash-codierten Kennzeichnung des Domain-Namens steht.

4. Der Netzadressen-Server gemäß Anspruch 1, wobei jeder der gesagten Datenbank-Datensätze (300) wenigstens ein Datensatzzeichen umfasst, das einen Zeichensatztyp des Datensatzes aufweist, und ferner einen Identifikator (306) für den Zeichensatz des Datensatzes, welcher den Zeichensatztyp des Datensatzes identifiziert.

5. Ein Verfahren zum Auflösen der Kennzeichnung eines Ziel-Domain-Namens mit einer Netzadresse in einem Netzadressen-Namensraum mit mehreren Ebenen, wobei das Verfahren die folgenden Schritte umfasst:
das Empfangen mit einem ersten Netzadressen-Server (200) einer Abfrage nach der Netzadresse, welche der Kennzeichnung des Ziel-Domain-Namens (402) entspricht, wobei der erste Netzadressen-Server (200) einer von einer Vielzahl von Netzadressen-Servern (200) ist, wobei jedem eine gemeinsame Ebene des Netzadressen-Namensraums zugeordnet ist, jeder der Netzadressen-Server Datenbank-Datensätze (300) umfasst, die einen jeweiligen eindeutigen Bereich der gemeinsamen Ebene definieren, jeder der gesagten Datenbank-Datensätze (300) eine Kennzeichnung eines Adressnamens (302) und eine Netzadresse (304) umfasst, welcher eindeutig die Kennzeichnung des Adressnamens (302) zugeordnet ist;
in dem ersten Netzadressen-Server (200) das Bestimmen einer Korrelation zwischen der empfangenen Kennzeichnung des Ziel-Domain-Namens (402) und dem zugeordneten Bereich;
das Mitteilen der bestimmten Korrelation den anderen Netzadressen-Servern (200), und mit dem ersten Netzadressen-Server (200) das Empfangen eines Hinweises einer entsprechenden bestimmten Korrelation von wenigstens einem der anderen Netzadressen-Server (200); und
in dem ersten Netzadressen-Server (200) das Bereitstellen einer Antwort auf die Abfrage in Übereinstimmung mit den bestimmten Korrelationen.

6. Das Verfahren gemäß Anspruch 5, wobei jeder der gesagten Netzadressen-Server (200) eine Antwortzeit für die Korrelation aufweist, und der erste Netzadressen-Server (200) die kürzeste der Antwortzeiten für die Korrelation aufweist.

7. Das Verfahren gemäß Anspruch 5, wobei jeder der Datenbank-Datensätze (300) wenigstens ein Datensatzzeichen umfasst, das einen Zeichensatztyp des Datensatzes aufweist, und ferner einen Identifikator (306) für den Zeichensatz des Datensatzes, welcher den Zeichensatztyp des Datensatzes identifiziert, die Kennzeichnung des Ziel-Domain-Namens (402) wenigstens ein Adressnamen-Zeichen umfasst, das einen Zeichensatztyp des Adressnamens aufweist, und ferner einen Identifikator (404) für den Zeichensatz des Adressnamens, der den Zeichensatztyp des Adressnamens identifiziert, und der Schritt des Bestimmens einer Korrelation die Schritte des Abfragens der jeweiligen Datenbank-Datensätze (300) mit der empfangenen Kennzeichnung des Adressnamens (402) und des Erzielens einer Korrelation des wenigstens einen Adressnamen-Zeichens und des zugeordneten Identifikators (404) des Zeichensatzes des Adressnamens umfasst, mit jedem des gesagten wenigstens einen Datensatzzeichens und des zugeordneten Identifikators (306) des Zeichensatzes des Datensatzes.

8. Das Verfahren gemäß Anspruch 7, wobei die Datenbank-Datensätze (300) mit einer Hash-Codierungsfunktion codiert sind, und der Schritt des Erzielens einer Korrelation die Schritte des Codierens der Kennzeichnung des Ziel-Adress-Namens (402) mit der Hash-Codierungsfunktion umfasst, und ferner des Abfragens der Hash-codierten Datenbank-Datensätze (308) mit der Hash-codierten Kennzeichnung des Adressnamens.

9. Ein Verfahren zum Auflösen von Netz-Domain-Namen, umfassend die folgenden Schritte:
das zur Verfügung stellen einer Vielzahl von Netzadressen-Servern (200) zum Abbilden eines hierarchischen Netzadressen-Namenraumes, wobei der hierarchische Adressnamen-Raum eine Vielzahl von Ebenen aufweist, jedem der gesagten Netzadressen-Server (200) wenigstens ein anderer der gesagten Netzadressen-Server (200) und eine gemeinsame Ebene des Netzadressen-Namenraumes zugeordnet ist, jeder der gesagten
Netzadressen-Server (200) Datenbank-Datensätze (300) umfasst, die einen jeweiligen eindeutigen Bereich der zugeordneten gemeinsamen Ebene definieren, jeder der gesagten Datenbank-Datensätze (300) eine Kennzeichnung eines Adressnamens (302) und eine Netzadresse (304), welcher eindeutig die Kennzeichnung des Adressnamens (302) zugeordnet ist, umfasst;
das Empfangen mit wenigstens einem der Netzadressen-Server (200) einen Ziel-Domain-Namen zum Auflösen, wobei der Ziel-Domain-Name eine Vielzahl von Adress-Namen-Kennzeichnungen (402) umfasst, jeder der gesagten Adress-Namen-Kennzeichnungen einer der Bereiche von jeweils einer der gemeinsamen Ebenen zugeordnet ist; und
für jede der gesagten Adress-Kennzeichnungen (402) das Abfragen der Netzadressen-Server (200), welche die eine gemeinsame Ebene definieren.

10. Das Verfahren gemäß Anspruch 9, wobei der Schritt des Empfangens der Netz-Adresse die folgenden Schritte umfasst: das Bestimmen in jedem der gesagten abgefragten Netzadressen-Server (200) einer Korrelation zwischen der abgefragten Adress-Namen-Kennzeichnung (402) und der jeweils definierten Untermenge des Adressnamen-Raumes, das Versorgen von anderen der abgefragten Netzadressen-Server (200) mit einem Hinweis der Korrelation, und das Empfangen der Korrelationshinweise von den anderen abgefragten Netzadressen-Servern (200), und das Aussenden einer Antwort auf die Abfrage in Übereinstimmung mit den Korrelationshinweisen.

11. Das Verfahren gemäß Anspruch 10, wobei jeder von den gesagten abgefragten Netzadressen-Servern (200) eine Antwortzeit für den Korrelationshinweis aufweist, und der Schritt des Aussendens einer Antwort das Aussenden der Antwort von dem abgefragten Netzadressen-Server (200) umfasst, welcher die kürzeste der Antwortzeiten der Korrelationshinweise aufweist.

12. Das Verfahren gemäß Anspruch 10, wobei jeder der Datenbank-Datensätze (300) wenigstens ein Datensatzzeichen umfasst, welches einen Zeichensatztyp des Datensatzes aufweist, und ferner einen Identifikator (306) für den Zeichensatz des Datensatzes, welcher den Zeichensatztyp des Datensatzes identifiziert, die abgefragte Adress-Namen-Kennzeichnung (402) wenigstens ein Adressnamen-Zeichen umfasst, welches einen Zeichensatz-Typ des Adressnamens aufweist, und ferner einen Identifikator (404) für den Zeichensatz des Adressnamens, welcher den Zeichensatztyp des Adressnamens identifiziert, und wobei der Schritt des Bestimmens der Korrelation die folgenden Schritte umfasst: das Empfangen der abgefragten Adress-Namen-Kennzeichnung (402) und das Abfragen der jeweiligen Datenbank-Datensätze (300) mit dem wenigstens einen Adressnamen-Zeichen und dem zugeordneten Identifikator (404) für den Zeichensatz des Adressnamens, zum Erzielen einer jeweiligen Korrelation mit jedem des gesagten wenigstens einen Datensatzzeichens und des zugeordneten Identifikators (306) des Zeichensatzes des Datensatzes.

13. Das Verfahren gemäß Anspruch 12, wobei die Datenbank-Datensätze (300) mit einer Hash-Codierungsfunktion codiert sind, und der Schritt des Abfragens der jeweiligen Datenbank-Datensätze (300) die folgenden Schritte umfasst: das Codieren von jeder abgefragten Adress-Namen-Kennzeichnung (402) mit der Hash-Codierungsfunktion und das Abfragen der Hash-codierten Datenbank-Datensätze (308) mit den Hash-codierten Adress-Namen-Kennzeichnungen.

## Revendications

1. Serveur d'adresses de réseau (200) pour résoudre un label de nom de domaine cible avec une adresse de réseau, **caractérisé en ce que** le serveur d'adresses de réseau (200) fait partie d'une pluralité de serveurs d'adresse de réseau (200) dont chacun est associé à un niveau commun d'un espace d'adresses de réseau multi-niveaux, lequel serveur d'adresses de réseau (200) comprend :
une base de données de noms d'adresse (212) comprenant une pluralité d'enregistrements de base de données (300) associés à une région correspondante du niveau commun, chacun desdits enregistrements de base de données (300) comprenant un label de nom d'adresse (302) et une adresse de réseau (304) associée de façon unique au label de nom d'adresse (302) ; et
un processeur de noms d'adresse (214) communiquant avec la base de données de noms d'adresse (212) et destiné à produire une réponse à une demande d'adresse de réseau correspondant au label de nom de domaine cible (402), lequel processeur de noms de domaine (214) comprend un processeur de corrélation (216) destiné à déterminer une corrélation entre le label de nom de domaine cible (402) et la région associée, un émetteur-récepteur de corrélation (218) communiquant avec le processeur de corrélation (216) afin de recevoir une indication d'une corrélation déterminée correspondante à partir l'un au moins des autres serveurs d'adresses de réseau (200), et un processeur de réponse (220) communiquant avec le processeur de corrélation (216) et l'émetteur-récepteur de corrélation (218) pour fournir une réponse à l'interrogation en fonction des corrélations déterminées.

2. Serveur d'adresses de réseau selon la revendication 1, **caractérisé en ce que** la base de données de noms d'adresse (212) comprend pour chacun desdits enregistrements de base de données (300) un code d'adressage calculé dérivé d'une fonction d'adressage calculé associant de manière unique le code d'adressage calculé dérivé au label de nom d'adresse correspondant.

3. Serveur d'adresses de réseau selon la revendication 2, **caractérisé en ce que** le processeur de corrélation (216) comprend un processeur de code d'adressage calculé (224) destiné à produire le label de nom de domaine cible avec la fonction d'adressage calculé, et un moteur de recherche (222) communiquant avec le processeur de corrélation (216) pour interroger les enregistrements de base de données (308) avec le label de nom de domaine dont l'adressage a été calculé.

4. Serveur d'adresses de réseau selon la revendication 1, **caractérisé en ce que** chacun desdits enregistrements de base de données (300) comprend au moins un caractère d'enregistrement ayant un type d'ensemble de caractères d'enregistrement et un identifiant d'ensemble de caractères d'enregistrement (306) identifiant le type d'ensemble de caractères d'enregistrement.

5. Procédé pour résoudre un label de nom de domaine cible avec une adresse de réseau dans un espace de noms d'adresses de réseau multi-niveaux, lequel procédé comprend les étapes de :
réception sur un premier serveur d'adresses de réseau (200) d'une demande concernant l'adresse de réseau correspondant au label de nom de domaine cible (402), le premier serveur d'adresses de réseau (200) faisant partie d'une pluralité de serveurs d'adresses de réseau (200) dont chacun est associé à un niveau commun de l'espace de noms d'adresses de réseau, les serveurs d'adresses de réseau comprenant chacun des enregistrements de base de données (300) définissant une région unique correspondante du niveau commun, chacun desdits enregistrements de base de données (300) comprenant un label de nom d'adresse (302) et une adresse de réseau (304) associée de façon unique au label de nom d'adresse (302) ;
détermination, au niveau du premier serveur d'adresses de réseau (200), d'une corrélation entre le label de nom de domaine cible (402) reçu et la région associée ;
fourniture aux autres serveurs d'adresses de réseau (200) de la corrélation déterminée et, au niveau du premier serveur d'adresses de réseau (200), réception d'une indication d'une corrélation déterminée correspondante depuis l'un au moins des autres serveurs d'adresses de réseau (200) ; et
au niveau du premier serveur d'adresses de réseau (200), fourniture d'une réponse à l'interrogation en fonction des corrélations déterminées.

6. Procédé selon la revendication 5, **caractérisé en ce que** chaque serveur d'adresses de réseau (200) a un temps de réponse de corrélation, et le premier serveur d'adresses de réseau (200) a le temps de réponse de corrélation le plus court.

7. Procédé selon la revendication 5, **caractérisé en ce que** les enregistrements de base de données (300) comprennent chacun au moins un caractère d'enregistrement ayant un type d'ensemble de caractères d'enregistrement, et un identifiant d'ensemble de caractères d'enregistrement (306) qui identifie le type d'ensemble de caractères d'enregistrement, le label de nom de domaine cible (402) comprend au moins un caractère de nom d'adresse ayant un type d'ensemble de caractères de nom d'adresse, et un identifiant d'ensemble de caractères de nom d'adresse (404) identifiant le type d'ensemble de caractères de nom d'adresse, et l'étape de détermination d'une corrélation comprend les étapes d'interrogation des enregistrements de base de données (300) correspondants avec le label de nom d'adresse (402) reçu et d'obtention d'une corrélation du caractère de nom d'adresse au nombre d'un au moins et de l'identifiant d'ensemble de caractères de nom d'adresse (404) associé avec ledit caractère d'enregistrement au nombre d'un au moins et l'identifiant d'ensemble de caractères d'enregistrement (306) associé.

8. Procédé selon la revendication 7, **caractérisé en ce que** les enregistrements de base de données (300) sont codés avec une fonction d'adressage calculé, et l'étape d'obtention d'une corrélation comprend les étapes de codage du label de nom d'adresse cible (402) avec la fonction d'adressage calculé et d'interrogation des enregistrements de base de données (308) avec le label de nom d'adresse dont l'adressage a été calculé.

9. Procédé pour la résolution de noms de domaine de réseau, comprenant les étapes de :
mise en place d'une pluralité de serveurs d'adresses de réseau (200) pour cartographier un espace de noms d'adresses de réseau hiérarchisé, lequel espace de noms d'adresses de réseau hiérarchisé possède une pluralité de niveaux, chacun desdits serveurs d'adresses de réseau (200) étant associé à au moins un autre desdits serveurs d'adresses de réseau (200) et à un niveau commun de l'espace de noms d'adresses de réseau, chacun desdits serveurs d'adresses de réseau (200) comprenant des enregistrements de base de données (300) définissant chacun une région unique correspondante du niveau commun associé, chacun desdits enregistrements de base de données (300) comprenant un label de nom d'adresse (302) et
une adresse de réseau (304) associée de façon unique au label de nom d'adresse (302) ;
réception sur l'un des serveurs d'adresses de réseau (200) d'un nom de domaine cible à résoudre, lequel nom de domaine cible comprend une pluralité de labels de nom d'adresse (402), chacun desdits labels de nom d'adresse étant associé à l'une des régions d'un niveau commun correspondant ; et
pour chaque label de nom d'adresse (402), interrogation des serveurs d'adresses de réseau (200) définissant ce niveau commun.

10. Procédé selon la revendication 9, **caractérisé en ce que** l'étape de réception de l'adresse de réseau comprend, pour chaque serveur d'adresses de réseau (200), la détermination d'une corrélation entre le label de nom d'adresse (402) faisant l'objet de l'interrogation et le sous-ensemble d'espace de noms d'adresses défini correspondant, la fourniture aux autres serveurs d'adresses de réseau (200) interrogés d'une indication de la corrélation et la réception d'indications de corrélation des autres serveurs d'adresses de réseau (200) interrogés, et la transmission d'une réponse à l'interrogation en fonction des indications de corrélation.

11. Procédé selon la revendication 10, **caractérisé en ce que** chacun desdits serveurs d'adresses de réseau (200) a un temps de réponse pour l'indication de la corrélation, et l'étape de transmission d'une réponse comprend la transmission de la réponse à partir du serveur d'adresses de réseau (200) ayant le plus court des temps de réponse pour l'indication de la corrélation.

12. Procédé selon la revendication 10, **caractérisé en ce que** les enregistrements de base de données (300) comprennent chacun au moins un caractère d'enregistrement ayant un type d'ensemble de caractères d'enregistrement et un identifiant d'ensemble de caractères d'enregistrement (306) qui identifie le type d'ensemble de caractères d'enregistrement, le label de nom d'adresse (402) comprend au moins un caractère de nom d'adresse ayant un type d'ensemble de caractères de nom d'adresse et un identifiant d'ensemble de caractères de nom d'adresse (404) qui identifie le type d'ensemble de caractères de nom d'adresse, et l'étape de détermination de la corrélation comprend les étapes de réception du label de nom d'adresse (402) faisant l'objet de l'interrogation et d'interrogation des enregistrements de base de données (300) avec le caractère de nom d'adresse au nombre d'un au moins et l'identifiant d'ensemble de caractères de nom d'adresse (404) associé pour obtenir une corrélation correspondante avec chaque caractère d'enregistrement au nombre d'un au moins et l'identifiant d'ensemble de caractères d'enregistrement (306) correspondant.

13. Procédé selon la revendication 12, **caractérisé en ce que** les enregistrements de base de données (300) sont codés avec une fonction d'adressage calculé, et l'étape d'interrogation des enregistrements de base de données (300) correspondants comprend les étapes de codage de chaque label de nom d'adresse (402) faisant l'objet de l'interrogation avec la fonction d'adressage calculé et d'interrogation des enregistrements de base de données (308) à adressage calculé avec les labels de nom d'adresse dont l'adressage a été calculé.
